# EUROPÄISCHE PATENTSCHRIFT

(11) **EP 1 907 310 B1**
(45) Veröffentlichungstag und Bekanntmachung des Hinweises auf die Patenterteilung: **29.10.2008**
(21) Anmeldenummer: 05740666.2
(22) Anmeldetag: 20.05.2005
(51) Int. Cl.: B66F 9/06, B66F 9/12, B62D 63/06

(54) **ANHÄNGER FÜR EIN KRAFTFAHRZEUG**
TRAILER FOR A MOTOR VEHICLE
REMORQUE POUR UN VEHICULE AUTOMOBILE

(43) Veröffentlichungstag der Anmeldung: 09.04.2008
(73) Patentinhaber: Varch, Wolfgang, 9064 Pischeldorf (AT)
(72) Erfinder: Varch, Wolfgang, 9064 Pischeldorf (AT)
(74) Vertreter: Hehenberger, Reinhard
(86) Internationale Anmeldenummer: PCT/AT2005/000173
(87) Internationale Veröffentlichungsnummer: WO 2006/122336

(56) Entgegenhaltungen:
- WO-A-95/32917
- DE-U1- 8 805 335
- FR-A- 2 654 047
- GB-A- 2 153 339

## Beschreibung

Die Erfindung betrifft einen zweiachsigen Anhänger für ein Kraftfahrzeug mit einem Anhänger-Rahmen, an dessen Rahmen-Längselementen zwei in Längsrichtung voneinander beabstandete Räderpaare angeordnet sind, und einer im Inneren des Anhängers angebrachten Hubstaplervorrichtung, welche Hubstaplervorrichtung innerhalb des Anhängers zwischen einer Transpotstellung, in der Ladegut transportierbar ist, und einer Verladestellung, in der Ladegut mit der Hubstaplervorrichtung heb- und senkbar ist, verschiebbar ist, wobei zumindest ein Querverbindungselement vorgesehen ist, das die Rahmen-Längselemente im Bereich der Räder miteinander verbindet, und daß die Verladestellung der Hubstaplervorrichtung - in Fahrtrichtung gesehen - sich unmittelbar hinter dem zumindest einen Querverbindungselement befindet, sodaß die Hubstaplervorrichtung bis zum Bodenniveau, auf dem der Anhänger steht, absenkbar ist.

Auf Baustellen erfolgt die Zubringung von Baumaterial, Werkzeugen etc. üblicherweise durch Lastkraftwagen-Transporte, welche für den Bauunternehmer entsprechende Frachtkosten verursachen. Nicht immer können solche Transporte ökonomisch sinnvoll ausgeführt werden, da nur die Lieferung von großen Materialmengen wirtschaftlich ist, diese aber vor Ort z.B. gegen Diebstahl oder Wettereinflüsse nicht ausreichend geschützt werden können. Dazu kommen die relativ langen Vorlaufzeiten für solche Transporte, da die Frächter für jede Bestellung eine Lieferzeit von mehreren Tagen benötigen.

Kleinere Subunternehmer wiederum, die auf der Baustelle etwa nur für Bauarbeiten geringen Umfanges verantwortlich sind, benötigen oft nur relativ wenig Baumaterial, wie Sand, Fliesen, Zement od. dgl. und bringen diese in Klein-Transportern oder Anhängern mit, weil Lkw-Transporte hiefür zu hohe Kosten verursachen würden.

Insgesamt ist die Verbringung von kleinen Baumaterialmengen erwünscht und sinnvoll, bereitet aber einen entsprechenden Zeit- und Arbeitsaufwand, weil die Ladeflächen von Kleintransportern und Anhängern für ein rationelles Be- und Entladen nicht ausgelegt sind, und daher ein mühsames Manipulieren des Baumaterials bewerkstelligt werden muß. Was ein Llefer-Lkw mittels Kran in einem Arbeitsgang aufladen und entladen könnte, geschieht bei solchen kleineren Lieferungen z.B. durch Aufschultern und Tragen von Säcken oder anderen Behältnissen, da insbesondere kleine Baustellen über keine entsprechenden Kran- oder Hebevorrichtungen für diese Art von Arbeiten verfügen.

In der GB 2 145 995 A ist ein einachsiger Anhänger mit U-förmigem Rahmen und einer darin angeordneten Hubstaplervorrichtung mit in Längsrichtung sich erstreckenden Gabelarmen zur Aufnahme von Ladegut gezeigt.

Die GB 2 153 339 A beschreibt einen einachsigen Gabelstapler-Anhänger für landwirtschaftliche Zugfahrzeuge, dessen Rahmen sich im wesentlichen aus zwei Längselementen und zwei Querverbindungselementen zusammensetzt Für die zwischen einer Transportstellung und einer Verladestellung verschiebbare Gabelstapler-Vorrichtung ist auf der Anhängerdeichsel ein entsprechendes Gegengewicht vorgesehen, das die beim Beladen auftretenden Kippmomente ausgleicht, während der Fahrt aber als zusätzliche Last von der Anhängerkupplung zu tragen ist. Während des Ladevorgangs kann die Gabelstaplervorrichtung hinter den Querverbindungselementen bis zum Boden abgesenkt werden, um die zu transportierende Last aufnehmen zu können.

In der WO 95/32917 A ist ein Anhänger mit einer horizontal verfahrbaren Hubstaplervorrichtung zur Durchführung von Verladearbeiten gezeigt, welcher einen U-förmigen Anhängerrahmen aufweist. Durch die im Anhänger integrierte Hubstaplervorrichtung kann der Antransport z.B. nur einer Palette Baumaterial sehr effizient erfolgen, indem diese Palette mit dem Anhänger angeliefert und dann mit der Hubstaplervorrichtung abgeladen werden kann, ohne daß es dafür vor Ort eines gesonderten Krans oder eines Gabelstaplers bedarf. Unabhängig davon, ob am Lieferort mechanische Ladevorrichtungen vorhanden sind oder nicht, kann somit der Antransport der Last und das Entladen oder Beladen sehr rasch durchgeführt werden. Ist beispielsweise noch zusätzliches Material auf einer Baustelle erforderlich, so kann dieses sofort von einem Baumarkt abgeholt werden, ohne auf Bestellzeiten und Frachtkosten Rücksicht nehmen zu müssen. Durch die Verschiebbarkeit des Schlittens im Inneren Anhängers kann die Hubstaplervorrichtung in eine Verladestellung gebracht werden kann, in der die Hubstaplervorrichtung bis zum Bodenniveau abgesenkt werden kann. Um das Absenken der Hubstaplervorrichtung auch zwischen den Anhängerseitenwänden zu ermöglichen, sind die Räder nicht auf einer durchgehenden Achse sondern an Achsstummeln an den Seiten des Anhängers gelagert. Auf diese Weise kann diese Art von Anhänger nur mit einer Überbreite gebaut werden, welche die Verwendbarkeit einschränkt. Zudem ergibt sich durch die offene Rahmenbauweise eine relativ schwere Konstruktion, wenn eine ausreichende Steifigkeit gewährleistet sein soll, dies hat aber negative Auswirkungen auf den Treibstoffverbrauch des Zugfahrzeuges und auf dessen Fahreigenschaften.

In der DE 88 05 335 U ist ein Anhänger zur Aufnahme von Paletten offenbart, in welchem ein Hubbalken mittels eines Kettenförderers verfahrbar angebracht ist, sodaß eine Palette mittels eingebrachten Stützstäben aus einem vorderen Anhängerbereich hinter die Anhängerachsen verbringbar und dann auf Bodenniveau absenkbar ist. Die Ladefläche setzt sich dabei aus einem festen und einem beweglichen Ladeboden zusammen, wobei der feste Ladeboden in einem Vierkantprofil des Anhängerrahmens gehalten ist, das im Bereich der Radachsen eine Querverbindung zwischen zwei Längsprofilen beinhaltet.

Aufgabe der Erfindung ist es daher, einen Anhänger der eingangs genannten Art anzugeben, mit dem Lasten geringen Umfanges so transportiert werden können, daß ein Beladen und Entladen des Anhängers mit geringem Arbeits- und Zeitaufwand möglich ist, der Anhänger aber eine ausreichende Stabilität bei geringem Eigengewicht aufweist.

Eine weitere Aufgabe der Erfindung besteht darin, einen Anhänger anzugeben, der mit einfachen technischen Mitteln realisierbar ist.

Erfindungsgemäß wird dies dadurch erreicht, daß die Hubstaplervorrichtung entgegengesetzt zur Fahrrichtung des Anhängers orientierte Gabelarme umfaßt, die in entsprechende Gabelschlitze einer Last einbringbar sind, daß zwei mit den Rahmen-Längselementen fest verbundene Querverbindungselemente vorgesehen sind, die als Hohlprofile ausgebildet sind, in deren Enden Lagerschenkel zur Lagerung der Räder elastisch verdrehbar geführt sind, wobei die Hubstaplervorrichtung in der Verladestellung hinter dem hinteren Querverbindungselement der zwei Querverbindungselemente absenkbar ist.

Durch das Vorsehen von zwei Querverbindungselementen wird die für die Durchführung von Verladearbeiten mit der Hubstaplervorrichtung erforderliche Rahmensteifigkeit und zugleich eine leichte Bauweise des Anhängers erzielt, welche die Einsatzfähigkeit für verschiedenste Anwendungen verbessert und den Treibstoffverbrauch des Zugfahrzeuges erniedrigt. Zugleich wird die übliche Baubreite beim erfindungsgemäßen Anhänger nicht überschritten, wodurch zusätzliche Sicherheitsmaßnahmen und Schwierigkeiten mit der Typisierung wegfallen.

Die ale Hohlprofile ausgebildeten Querverbindungselemente stellen eine erhöhte Anhängerstabilität bereit und dienen zugleich der Radlagerung und Stoßdämpfung. Auf diese Weise kann eine sehr geringe Baubreite erzielt werden.

Gemäß einer weiteren Ausführungsform der Erfindung kann der zur Verfügung stehende Raum im erfindungsgemäßen Anhänger dadurch vorteilhaft genutzt werden, daß die Hubstaplervorrichtung sich in Transportstellung im wesentlichen im vorderen Bereich des Anhängers und sich in Verladestellung im wesentlichen im Bereich des oder der Querverbindungselement(e) bzw. der Radachse(n) des Anhängers befindet, wobei die Hubstaplervorrichtung in Verladestellung hinter dem hinteren Querverbindungselement bzw. der hinteren Radachse bis zum Bodenniveau, auf dem der Anhänger steht, absenkbar ist.

Zu diesem Zweck kann in weiterer Ausbildung der Erfindung die Bodenwand des Anhängers zumindest teilweise entfernbar sein, sodaß die Hubstaplervorrichtung im Bereich des zumindest einen Querverbindungselements auf und ab bewegbar ist.

Insbesondere kann die Bodenwand sich aus einem fixen Bodenwandteil, der vom vorderen Anhängerbereich bis zu dem oder den Querverbindungselementen verläuft, und einem entfernbaren Bodenwandteil zusammensetzen, der sich von dem bzw. den Querverbindungselementen bis zur hinteren Anhängerwand erstreckt. Der auf diese Weise entfernbare Bodenwandteil kann bei Verladevorgängen aus dem erfindungsgemäßen Anhänger entnommen werden und dann die Hubstaplervorrichtung an den Übergang zwischen dem fixen Bodenwandelement und dem nunmehr offenen Bodenwandbereich herangeführt werden, um die Aufwärts- und Abwärtsbewegung des Hubstaplerelements durchführen zu können.

Eine Weiterbildung der Erfindung kann darin bestehen, daß die Hubstaplervorrichtung eine senkrecht verfahrbare Staplergabel, vorzugsweise mit zwei parallelen Gabelarmen aufweist. Mittels der Staplergabel können genormte Ladegutelemente, wie Paletten od. dgl. sowie Schüttgutvorrichtungen oder Betonmischmaschinen, welche geeignete Gabelschlitze aufweisen auf einfache Art und Weise auf den erfindungsgemäßen Anhänger geladen oder von diesem entladen werden. Der Abstand zwischen den Gabelarmen kann verstellbar sein, damit eine Anpassung auf unterschiedliche Ladevorrichtungen vorgenommen werden kann.

Um die Breite des Anhängers nicht zu groß zu dimensionieren, ist eine Ausrichtung der Gabelarme in Längsrichtung des Anhängers anzustreben. Für diesen Fall ist ein Be- und Entladen des Anhängers von der Rückseite des Anhängers aus bevorzugt, wobei die freien Enden der Gabelarme vorzugsweise entgegengesetzt zur Fahrtrichtung des Anhängers orientiert sind. Es können die Gabelarme entsprechend der jeweiligen Anforderungen auch anders angeordnet sein.

Falls der Betrieb eines hydraulischen oder elektrischen Antriebs für die Hubstaplervorrichtung konstruktiv zu aufwendig ist, kann diese mit einer Handkurbel erfolgen, sodaß ein Abladen unabhängig vom Vorhandensein einer externen Energiequelle oder einer Kopplung mit dem Zug-Kraftwagen durchgeführt werden kann.

Die Bewegbarkeit der Hubstaplervorrichtung des erfindungsgemäßen Anhängers kann auf verschiedene Arten geschehen, wobei gemäß einer Weiterbildung der Erfindung die Hubstaplervorrichtung auf einem horizontal verfahrbaren, hydraulisch angetriebenen Horizontal-Schlitten angeordnet ist, der zwischen der Transportstellung und der Verladestellung hin- und herbewegbar ist. Durch den Schlitten ist einerseits eine reibungsarme Bewegung möglich und andererseits bietet dieser eine stabile Auflage, um die während eines Verladevorganges wirksamen Kräfte und Kippmomente aufnehmen zu können.

Zum Zwecke einer leichtgängigen Verschiebbarkeit und einer sicheren Führung des horizontalen Schlittens innerhalb des erfindungsgemäßen Anhängers kann dieser seitlich angebrachte Führungsrollen aufweisen, die in waagrecht verlaufenden Profilführungen, die parallel zu den Seitenwänden des Anhängers angeordnet sind, geführt sind.

Die Profilführungen können beispielsweise durch U-Profile gebildet sein, die in Parallellage zu den Rahmen-Längselementen mit diesen verbunden sind und einen sicheren Halt der Führungsrollen des horizontal verfahrbaren Schlittens ermöglichen. Weiters kann auf dem horizontal verfahrbaren Schlitten ein Gestell mit vertikalen Führungsschienen angeordnet sein, in denen die Hubstaplervorrichtung, z.B. auf einem Vertikalschlitten senkrecht verfahrbar ist. In den Führungsschienen kann der Querschlitten z.B. über eine Rollenlagerung verschiebbar sein.

So wie die Hubstaplervorrichtung kann auch der Horizontal-Schlitten in vielfacher Weise angetrieben werden, eine Ausführungsform der Erfindung kann darin bestehen, daß der horizontal verfahrbare Horizontal-Schlitten über eine entlang der Anhängerlängsachse verlaufende, mit dem Schlitten in Wirkverbindung stehende Gewindespindel verfahrbar ist, die über eine Spindel-Handkurbel antreibbar ist. Dadurch wird ein robuster und sicherer händischer Antrieb des Schlittens ohne Einsatz von Fremdenergie verwirklicht.

Eine sichere und mechanisch stabile Festlegung der Anhänger-Seitenbegrenzung kann dadurch erreicht werden, daß auf den Rahmen-Längselementen Seitenwände befestigt sind.

Nachfolgend wird die Erfindung anhand eines in den angeschlossenen Zeichnungen dargestellten Ausführungsbeispiels der Erfindung eingehend erläutert. Es zeigt dabei
Fig.1 eine Rückansicht einer Ausführungsform des erfindungsgemäßen Anhängers mit der Hubstaplervorrichtung in Transportstellung;
Fig.2 eine Schrägrißdarstellung des Anhängers gemäß Fig.1 in Transportstellung;
Fig.3 eine Rückansicht des Anhängers gemäß Fig.1 in Verladestellung;
Fig.4 eine Schrägrißdarstellung des Anhängers gemäß Fig.1 in Verladestellung;
Fig 5 eine Seitenansicht des Anhängers gemäß Fig.1 in Transportstellung;
Fig.6 eine Draufsicht des Anhängers gemäß Fig.1 in Transportstellung;
Fig.7 eine Seitenansicht des Anhängers gemäß Fig.1 in Verladestellung;
Fig.8 eine Draufsicht des Anhängers gemäß Fig.1 in Verladestellung;
Fig.9 einen Längsschnitt BB durch den Anhänger gemäß Fig.1 in Verladestellung;
Fig.10 eine Draufsicht des Anhängers gemäß Fig.1 in Verladestellung;
Fig.11 einen Längsschnitt BB durch den Anhänger gemäß Fig.1 in Verladestellung;
Fig.12 eine Draufsicht des Anhängers gemäß Fig.1 in Verladestellung;
Fig.13 einen Schrägriß des Fahrgestells des Anhängers gemäß Fig.1;
Fig.14 einen Schrägriß des Fahrgestells des Anhängers gemäß Fig.1 mit montierten Laufschienen und Deichsel und
Fig.15 eine Explosionsdarstellung des Fahrgestells nach Fig.14 ohne Deichsel.

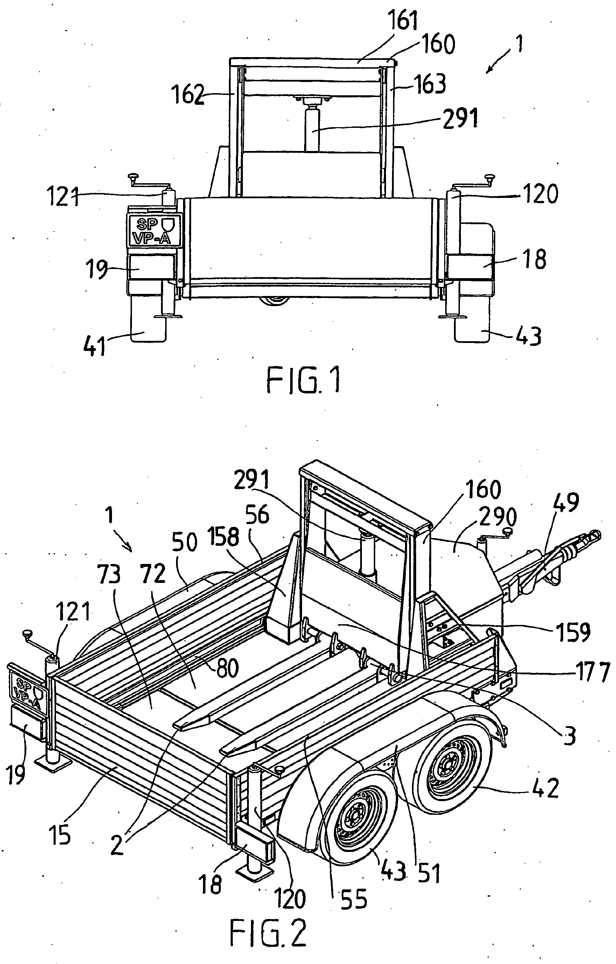

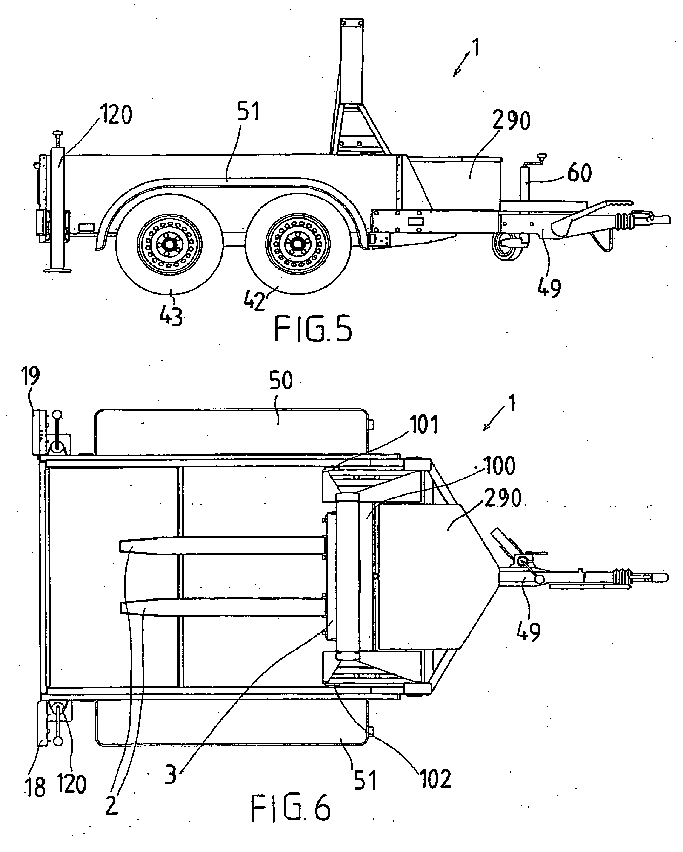

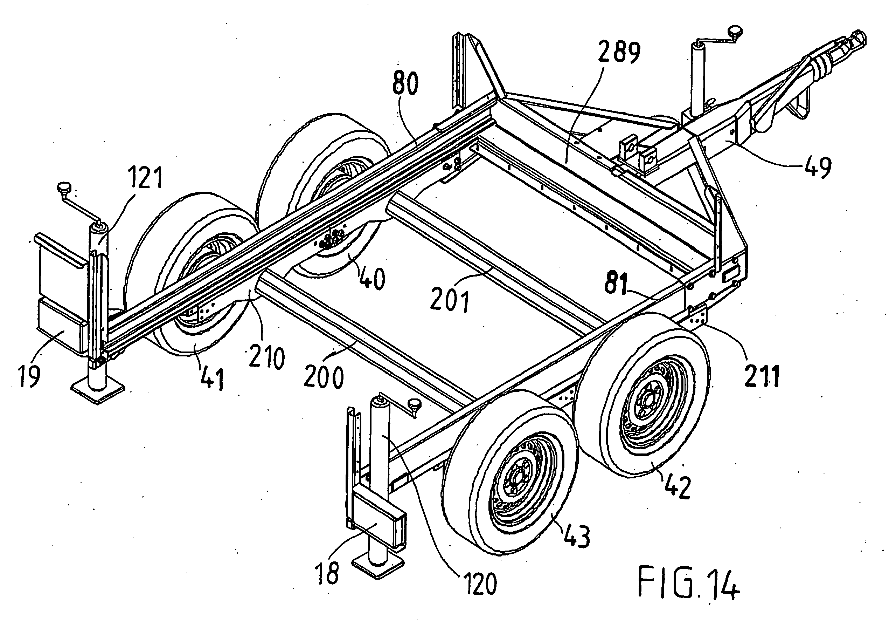

In Fig.1 bis 12 ist ein Ausführungsbeispiel eines erfindungsgemäßen Anhängers 1 gezeigt, der über eine mit einer Anhängerkupplung ausgestatteten Deichsel 49 von einem Fahrzeug, insbesondere einem Kraftfahrzeug jeglicher Art gezogen werden kann, wobei an den Seiten des Anhängers 1 Räderpaare 40, 41 und 42, 43 für die Fortbewegung vorgesehen sind, die durch Kotbleche 50, 51 teilweise überdeckt sind. Die Räderpaare 40, 41 und 42, 43 sind an einem Anhänger-Rahmen 210, 211, 289 (Fig.14) angeordnet.

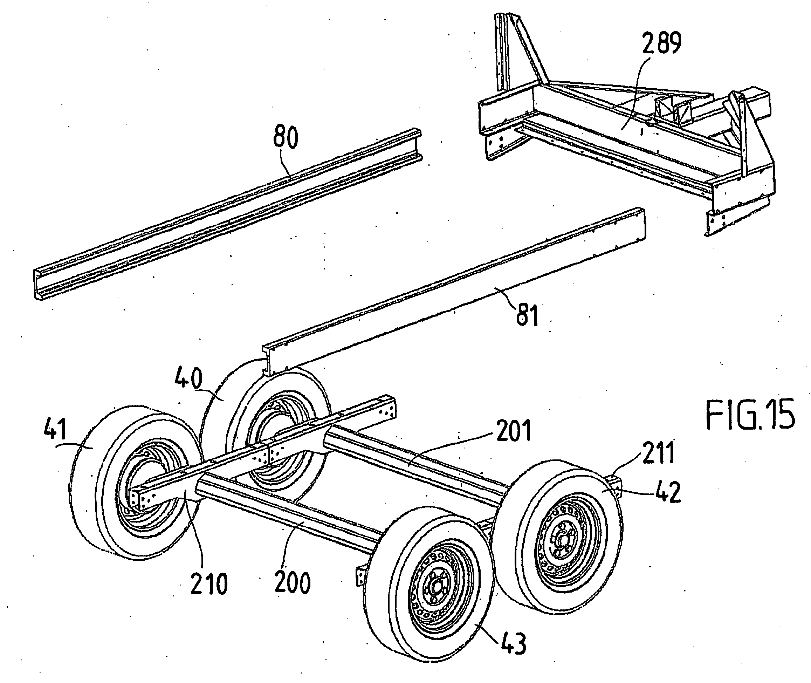

In Fig.15 ist der vordere Teil 289 des Anhängerrahmens gezeigt, welcher die beiden Rahmen-Längsteile 210, 211 mit den darauf angebrachten Profilführungen 80, 81 im vorderen Bereich des erfindungsgemäßen Anhängers 1 miteinander verbindet und die Verbindungsstelle mit der Deichsel 49 bereitstellt.

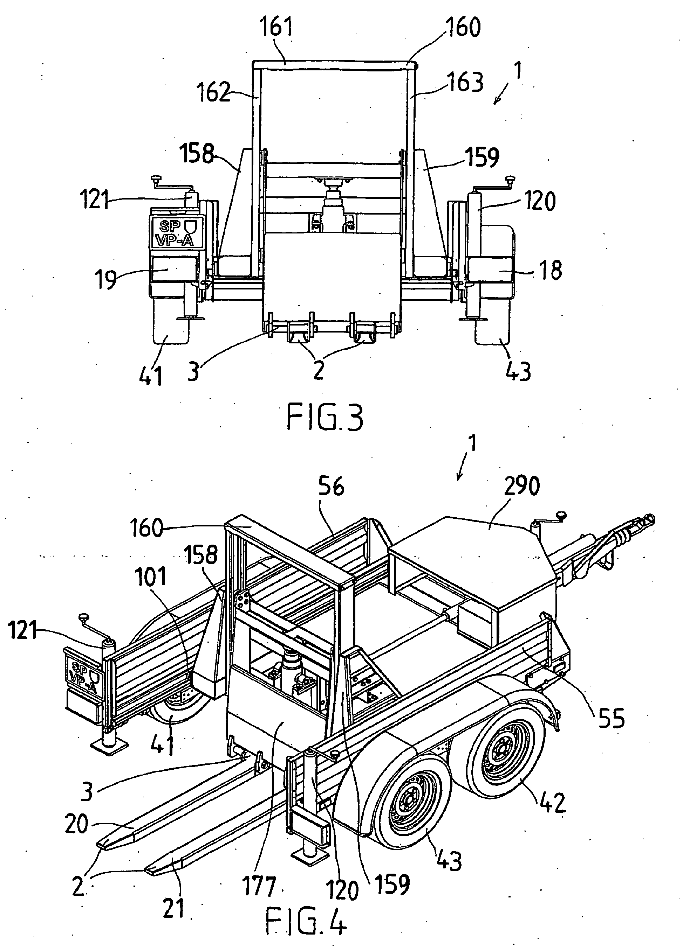

Im Inneren des Anhängers 1 ist eine Hubstaplervorrichtung 3 vorgesehen, die zwischen einer Transportstellung (Fig.1, 2), in der Ladegut transportierbar ist, und einer Verladestellung (Fig.3, 4), in der Ladegut mit der Hubstaplervorrichtung 3 heb- und senkbar ist, verschiebbar ist.

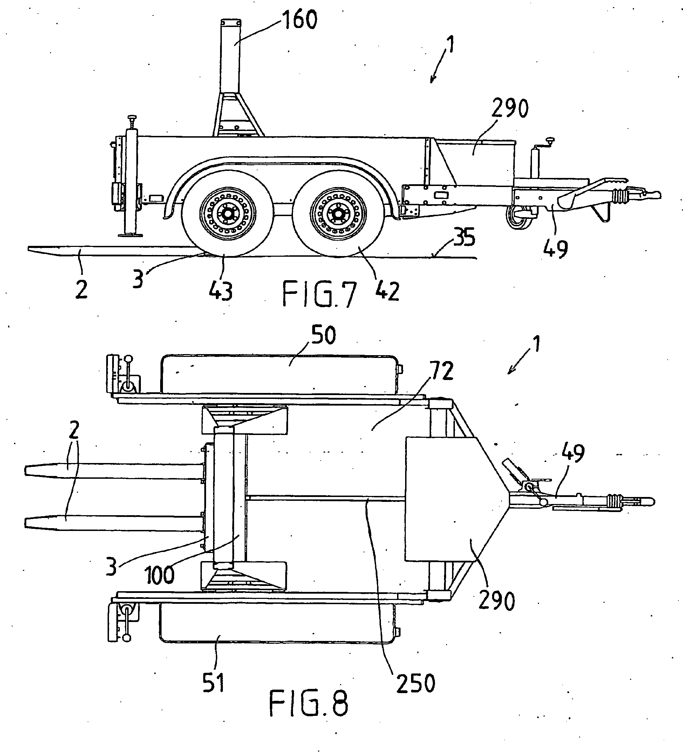

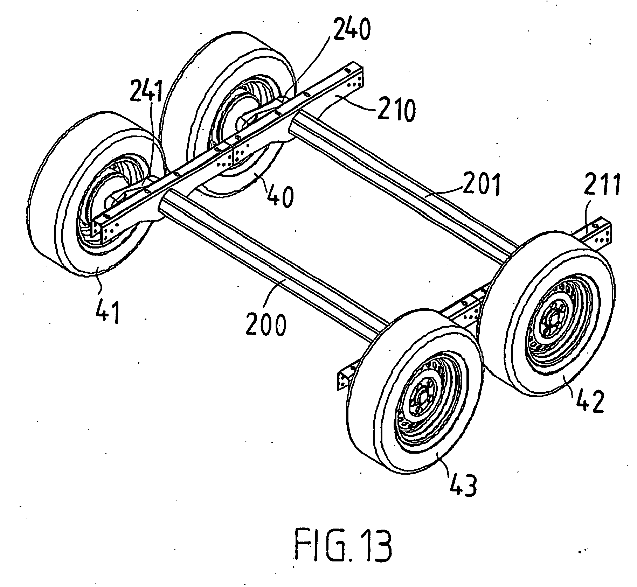

Erfindungsgemäß sind zwei Querverbindungselemente 200, 201 (Fig.13, 14) vorgesehen, welche die parallelen Rahmen-Längselemente 210, 211 im Bereich der Räder 40, 41, 42, 43 miteinander verbinden, wobei die Verladestellung der Hubstaplervorrichtung 3 - in Fahrtrichtung gesehen - sich unmittelbar hinter dem hinteren der beiden Querverbindungselemente 200, 201 befindet, sodaß die Hubstaplervorrichtung 3 bis zum Bodenniveau 35, auf dem der Anhänger 1 steht, absenkbar ist (Fig.7). Die beiden Querverbindungselemente 200, 201 sind mit den Rahmen-Längselementen 210, 211 fest verschraubt, um die Stabilität des Rahmens zu gewährleisten.

Anzahl und Art der Räder und der Querverbindungselemente können im Rahmen der Erfindung variieren, insbesondere ist neben der in den Figuren dargestellten Variante mit zwei Querverbindungselementen 200, 201 auch ein Anhänger mit nur einem Querverbindungselement oder mit mehr als zwei Querverbindungselementen realisierbar. Entsprechend kann der erfindungsgemäße Anhänger vorzugsweise zwei-, vier- oder sechsrädrig ausgebildet sein, hinsichtlich der Anzahl der Räder besteht keine Einschränkung.

Als Querverbindungselement im Sinne der Erfindung ist auch eine durchgehende Radachse zu verstehen, die fest mit dem Anhängerrahmen verbunden ist.

Der Anhänger 1 kann auch mit der Hand gezogen und verschoben werden. Behilflich ist dabei eine ausfahrbare Lenkrolle 60, welche an der Deichsel 49 abgestützt ist. Ausstattungsdetails wie Radaufhängung, Größe, Form und Ausstattung des Anhängers 1 sind nicht erfindungsspezifisch und können den Erfordernissen beliebig angepasst sein.

Dabei befindet sich die Hubstaplervorrichtung 3 in Transportstellung im wesentlichen - in Fahrtrichtung gesehen - im vorderen Bereich des Anhängers 1, wie in Fig. 1, 2 gezeigt. Eine von der Hubstaplervorrichtung 3 auf dem Anhänger 1 abgelegte, in den Fig.1, 2 nicht dargestellte Last befindet sich oberhalb der durchgehenden Querverbindungselemente 200, 201 und ruft während der Beförderung somit kein Kippmoment hervor.

In der in Fig.3, 4 gezeigten Verladestellung ist die Hubstaplervorrichtung 3 im wesentlichen in den Bereich der Querverbindungselemente 200, 201 des Anhängers 1 verschoben und hinter dem hinteren Querverbindungselement 200 auf das Bodenniveau 35 abgesenkt worden. In dieser Position verursacht eine mit der Hubstaplervorrichtung 3 gehobene Last ein Kippmoment, welches aber durch ausfahrbare Bodenstützen 120, 121, die mit Kurbeln bedient werden können, kompensiert wird.

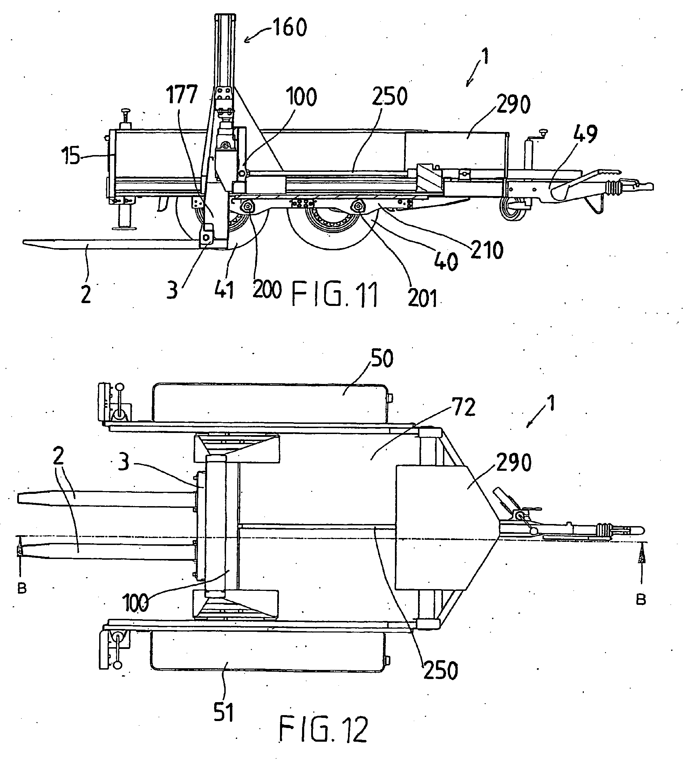

Die im Bereich der Räder 40, 41, 42, 43 durchgehenden Querverbindungselemente 200, 201 sind, wie bereits erwähnt, mit den Rahmen-Längselementen 210, 211 fest verbunden sind (Fig.13). Weiters sind die zwei Querverbindungselemente 200, 201 in an sich bekannter Weise als Hohlprofile ausgebildet (Fig.11), in deren Enden Lagerschenkel 240, 241 zur Lagerung der Räder 40, 41, 42, 43 elastisch verdrehbar geführt sind. Eine auf die Räder 40, 41, 42, 43 wirkende Stoßkraft wird in eine Torsion der in den hohlen Querverbindungselementen 200, 201 vorhandenen elastischen Elemente umgewandelt und damit die Stoßwirkung gedämpft. Die Anhängerbreite überschreitet bei dieser Konstruktion das übliche Ausmaß nicht. Die Querverbindungselemente 200, 201 verlaufen in einem rechten Winkel zu den Rahmen-Längsteilen 210, 211, sie können aber schrägverlaufend angeordnet sein.

Der innere Aufbau oder das Profil der Querverbindungselemente 200, 201 kann den jeweiligen Bedürfnissen angepasst sein und ist auf keine bestimmte Form beschränkt.

In Fig.13 ist ein für die Zwecke der Erfindung verwendbares Fahrgestell gezeigt, das in dieser Form bekannt ist und über eine Herstellerfirma bezogen werden kann. Andere Ausführungsformen von Fahrgestellen sind ebenso einsetzbar. Wesentlich ist die sich zwischen einander gegenüberliegenden Rädern 40, 41 und 42, 43 erstreckende Querverbindung der Rahmen-Längsteile 210, 211 durch die parallelen Querverbindungselemente 200, 201 zur Erzielung einer hohen Rahmensteifheit und einer geringen Baubreite des erfindungsgemäßen Anhängers.

Im gezeigten Ausführungsbeispiel ist die Bodenwand 72, 73 des Anhängers 1 zumindest teilweise entfernbar, um das von der Hubstäplervorrichtung 3 bewegte Ladegut möglichst nahe dem hinteren Querverbindungselement 200 absetzen oder aufnehmen zu können und damit die Kippbelastung möglichst gering zu halten.

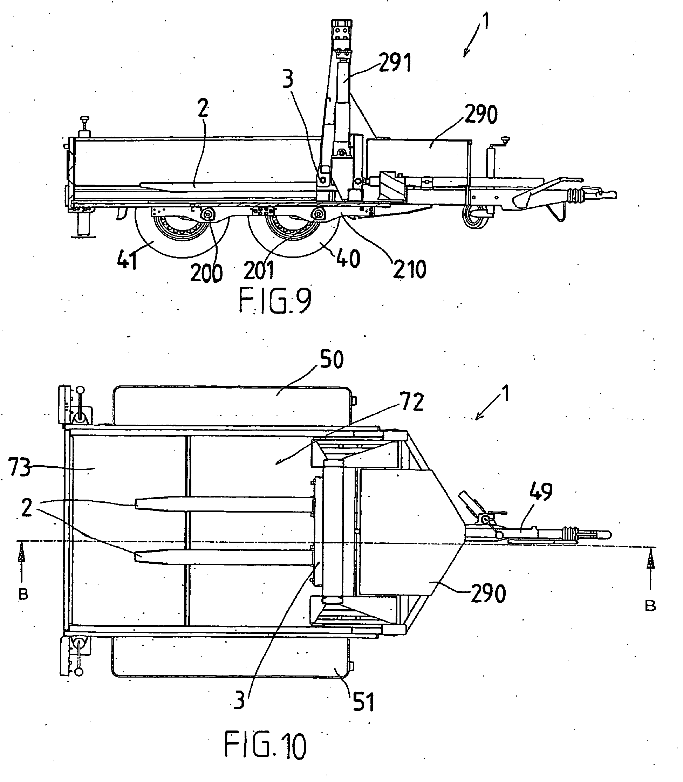

Zu diesem Zweck setzt sich die Bodenwand des Anhängers 1 aus einem fixen, vom Anhängerrahmen gehaltenen Bodenwandteil 72, der vom vorderen Anhängerbereich bis zum hinteren Querverbindungselement 200 verläuft und einem entfernbaren Bodenwandteil 73 (Fig.10) zusammen, der sich vom hinteren Querverbindungselement 200 bis zur hinteren Anhängerwand 15 erstreckt.

Der entfernbare Bodenwandteil 73 kann aus einem oder mehreren Brettern bestehen, die auf dem Rahmen 210, 211 oder auf den Querverbindungselementen 200, 201 aufliegen und bei Bedarf herausgenommen oder in den Anhänger 1 eingesetzt werden können. In Fig. 3, 4 ist der entfernbare Bodenwandteil 73 aus dem Anhänger 1 bereits entfernt und eine hintere Anhängerwand 15 (Fig.2), die auch schwenkbar oder kippbar ausgeführt sein kann, weggenommen worden, um der Hubstaplervorrichtung 3 Platz zu schaffen. Die Erstreckung des fixen und des entfernbaren Bodenwandteils 72, 73 kann den Erfordernissen angepaßt werden.

Unter der Hubstaplervorrichtung 3 wird im Rahmen der Erfindung jede Art von Hebevorrichtung verstanden, mit der eine Last angehoben oder abgesenkt werden kann. Im gezeigten Ausführungsbeispiel weist die Hubstaplervorrichtung 3 eine senkrecht verfahrbare Staplergabel 2 auf, die aus zwei parallelen Gabelarmen 20, 21 gebildet ist, die in entsprechende Gabelschlitze einer nicht dargestellten Last eingebracht werden können, um diese Last anzuheben oder abzusenken. Um vielfältige Anwendungsmöglichkeiten zuzulassen, ist der Abstand zwischen den Gabelarmen 20, 21 verstellbar, kann aber auch starr gewählt sein.

Die Gabelarme 20, 21 der Staplergabel 2 sind entgegengesetzt zur Fahrtrichtung des Anhängers 1 orientiert, sodaß die freien Enden der Gabelarme 20, 21 in Richtung zur Rückseite des Anhängers 1 weisen. Eine Betätigung der Hubstaplervorrichtung 3 geschieht mit Hilfe eines Hydraulikkolbens 291, sie kann aber auch über eine Spindel oder in einer anderen dem Fachmann bekannten Art angetrieben sein. In Fig.1 ist der Hydraulikkolben 291 in seiner ausgefahrenen Position gezeigt, welche der angehobenen Stellung der Hubstaplervorrichtung 3 entspricht. Natürlich kann die Hubstaplervorrichtung auch so ausgebildet sein, daß sie über das gezeigte Niveau hinaus angehoben werden kann.

Da der Hub der Hubstaplervorrichtung 3 - in Gebrauchslage gesehen - bis zum Bodenniveau 35 (Fig.7), auf dem der Anhänger 1 steht, nach unten reicht, kann jede auf dem Boden stehende Last, welche die Anhängerbreite nicht überschreitet und entsprechende Gabelschlitze aufweist, mit der Hubstaplervorrichtung 3 angehoben oder abgesenkt werden.

Die Verfahrbarkeit zwischen der Transportstellung und der Verladestellung wird dadurch erreicht, daß die Hubstaplervorrichtung 3 auf einem horizontal verfahrbaren Horizontal-Schlitten 100 angeordnet ist, welcher seitlich angebrachte Führungsrollen 101, 102 aufweist, die in waagrecht verlaufenden Profilführungen 80, 81, vorzugsweise U-Profile, die - wie in Fig.14 gezeigt - in Parallellage zu den Rahmen-Längselementen 210, 211 mit diesen verbunden, insbesondere verschraubt sind.

Über einen in Richtung der Anhängerlängsachse ausfahrbaren, mit dem Horizontal-Schlitten 100 in Wirkverbindung stehenden und über eine, in einem Anhängerkasten 290 untergebrachte Hydraulik-Einheit betätigbaren Hydraulikkolben 250 ist der Horizontal-Schlitten 100 horizontal zwischen der Transportstellung und der Verladestellung verfahrbar. Im Anhängerkasten 290, der sich im vorderen Anhängerbereich befindet, sind zusätzlich noch eine Steuerungs- und Bedieneinheit sowie eine Batterieversorgung wettergeschützt untergebracht. In der Verladestellung des Anhängers 1 ist der Hydraulikkolben 250 voll ausgefahren (Fig.12).

Auf dem Horizontal-Schlitten 100 ist ein Stützgestell 160 angebracht, das sich aus zwei parallelen Vertikal-Führungsschienen 162, 163 und einem oberen Querträger 161 zusammensetzt. In den zwei Vertikal-Führungsschienen 162, 163 ist die Hubstaplervorrichtung 3 mittels eines mit dieser verbundenen, über Rollen, geführten Vertikalschlittens 177 senkrecht verfahrbar. Der Vertikalschlitten 177 ist über den hydraulisch betätigten Kolben 291 auf- und abbewegbar. Die Art des Hubstapler-Antriebs ist hier nur beispielhaft angegeben und kann beliebig anders, z.B. über eine durch Kurbel angetriebene Gewindespindel oder mittels seilzuggetriebener Handkurbel ausgeführt sein. Das Stützgestell 160 ist an den Seiten mit pyramidenstumpfartigen Stützelementen 158, 159 gegen durch Lasten verursachte Kippbewegungen gesichert.

Soll der Anhänger 1, wie er in Fig.2 in der fahrbereiten Position gezeigt ist, beladen werden, wird die hintere Wand 15 geöffnet und der entfernbare Bodenwandteil 73 aus seiner Halterung im Anhänger 1 herausgezogen und beiseite gestellt. Nun kann die Hubstaplervorrichtung 3 durch Betätigung des Hydraulikkolbens 250 aus der Transportstellung in die Verladestellung (Fig.3, 4) gebracht und die Gabelarme 20, 21 der Staplergabel 2 zum Boden abgesenkt werden. Die Gabelarme 20, 21 können in an der Unterseite einer nicht dargestellten Last angebrachte Gabelschlitze eingeführt werden, und anschließend die Last durch Betätigung der nicht dargestellten Hubstapler-Kurbel vermittels der Gabelarme 20, 21 über das Niveau der fixen Bodenwand 72 in die Höhe gehoben werden.

Nun wird durch Verschiebung des Horizontal-Schlittens 100 infolge der Betätigung der Hydraulikkolbens 250 die Hubstaplervorrichtung 3 wieder in die Transportstellung gebracht und die Gabelarme 20, 21 mit ihrer Last wieder in Richtung Bodenwand 72 abgesenkt, sodaß die Last mit ihrer Unterseite auf der Bodenwand 72 zu liegen kommt und das Ladegut während des Transports sicher auf dieser ruht. Danach wird das entfernbare Bodenelement 73 wieder in den Anhänger 1 eingesetzt und die hintere Wand 15 wieder geschlossen.

Unter Last oder Ladegut wird im Sinne der Erfindung alles von einem Anhänger transportierbare Gut oder Einrichtungen verstanden. Als Ladegutelement zum Bewegen der Last dienen einfache Paletten od. dgl., es kommen aber auch jegliche andere Vorrichtungen bzw. Werkzeuge oder Maschinen zum Transport bzw. Anheben und Absenken durch den erfindungsgemäßen Anhänger in Frage, welche mit Gabelarmen einer Hubstaplervorrichtung angehoben oder abgesenkt werden können. Hier besteht ein reichhaltiges Angebot an Zubehör, z.B. können mit den Gabelarmen 20, 21 ein an sich bekannter Kippbehälter für Schüttgut, eine an sich bekannte Arbeitsbühne, eine an sich bekannte Betonmaschine usw. gehoben und gesenkt sowie vom Anhänger 1 transportiert werden. Wie weit die vom erfindungsgemäßen Anhänger beförderte Last angehoben werden kann, wenn nicht nur das Transportieren und Ablegen von Lasten sondern auch ein darüber hinausgehendes Anheben ausgeführt werden soll, hängt von der jeweiligen Konstruktion der Hubstaplervorrichtung 3 ab und ist im Rahmen der Erfindung an die jeweiligen Erfordernisse anpaßbar.

Im hinteren Bereich des Anhängers 1 sind weiters aus Gründen der Verkehrssicherheit Rückleuchten bzw. Rückstrahler 18, 19 vorgesehen.

## Patentansprüche

1. Zweiachsiger Anhänger (1) für ein Kraftfahrzeug mit einem Anhänger-Rahmen (210, 211, 289), an dessen Rahmen-Längselementen (210, 21.1) zwei in Längsrichtung voneinander beabstandete Räderpaare (40, 41, 42, 43) angeordnet sind, und einer im Inneren des Anhängers (1) angebrachten Hubstaplervorrichtung (3), welche Hubstaplervorrichtung (3) Innerhalb des Anhängers (1) zwischen einer Transportstellung, in der Ladegut transportierbar ist, und einer Verladestellung, in der Ladegut mit der Hubstaplervorrichtung (3) heb- und senkbar Ist, verschiebbar ist, wobei zumindest ein Querverbindungselement (200, 201) vorgesehen ist, das die Rahmen-Längselemente (210, 211) im Bereich der Räder (40, 41, 42, 43) miteinander verbindet, und daß die Verladestellung der Hubstaplervorrichtung (3) - in Fahrtrichtung gesehen - sich unmittelbar hinter dem zumindest einen Querverbindungselement (200, 201) befindet, sodaß die Hubstaplervorrichtung (3) bis zum Bodenniveau (35), auf dem der Anhänger (1) steht, absenkbar ist, **dadurch gekennzeichnet, daß** die Hubstaplervorrichtung entgegengesetzt zur Fahrrichtung des Anhängers (1) orientierte Gabelarme (20, 21) umfaßt, die in entsprechende Gabelschlitze einer Last einbringbar sind, daß zwei mit den Rahmen-Längselementen (210, 211) fest verbundene Querverbindungselemente (200, 201) vorgesehen sind, die als Hohlprofile ausgebildet sind, in deren Enden Lagerschenkel (240, 241) zur Lagerung der Räder (40, 41, 42, 43) elastisch verdrehbar geführt sind, wobei die Hubstaplervorrichtung (3) in der Verladestellung hinter dem hinteren Querverbindungselement (200) der zwei Querverbindungselemente (200, 201) absenkbar ist.

2. Anhänger nach Anspruch 1, **dadurch gekennzeichnet, daß** eine von der Hubstaplervorrichtung (3) auf dem Anhänger (1) abgelegte Last sich oberhalb der zwei Querverbindungselemente (200, 201) befindet.

3. Anhänger nach Anspruch 1 oder 2, **dadurch gekennzeichnet, daß** die Hubstaplervorrichtung (3) sich in Transportstellung im wesentlichen im - in Fahrtrichtung gesehen - vorderen Bereich des Anhängers (1) befindet.

4. Anhänger nach Anspruch 1, 2 oder 3, **dadurch gekennzeichnet, daß** eine Bodenwand (72, 73) vorgesehen ist, die zumindest teilweise entfernbar ist.

## Claims

1. Trailer (1) with two axes for a motor vehicle comprising a trailer frame (210, 211, 289) having two pairs of wheels (40, 41, 42, 43) arranged on the longitudinal elements (210, 211) thereof and located in longitudinal direction at a distance from each other and a forklift device (3) attached in the interior of the trailer (1), which forklift device (3) can be displaced inside the trailer (1) between a transport position in which goods can be transported and a loading position in which goods can be raised or lowered with the forklift device (3), there is provided at least one transverse connecting element (200, 201) which connects the frame longitudinal elements (210, 211) together in the area of the wheels (40, 41, 42, 43) and that the loading position of the forklift device (3), when viewed in the direction of travel, is located immediately behind the at least one transverse connecting element (200, 201) so that the forklift device (3) can be lowered as far as the ground level (35) on which the trailer (1) stands, **characterised in that** the forklift device comprises fork arms (20, 21) which are orientated opposite to the direction of travel of the trailer (1) and can be introduced into corresponding fork slits of a load, that two transverse connecting elements (200, 201) are provided, fixed to the longitudinal elements (210, 211) of the frame and being configured as hollow profiles, in the ends thereo bearing journals (240, 241) are guided in an elastically twistable manner for mounting the wheels (40, 41, 42, 43), in the loading position the forklift device (3) can be lowered behind the last transverse connecting element (200) of the two transverse connecting elements (200, 201).

2. Trailer according to claim 1, **characterised in that** a load put down on the trailer (1) by the forklift device (3) is located above the two transverse connecting elements (200, 201).

3. Trailer according to claim 1 or 2, **characterised in that** in the transport position, the forklift device (3) is located, when viewed in the direction of travel, substantially in the front area of the trailer (1).

4. Trailer according to claim 1, 2 or 3, **characterised in that** a floor wall (72, 73) is provided which this is at least partly removable.

## Revendications

1. Remorque (1) à deux essieux pour véhicule automobile, comportant un châssis de remorque (210, 211, 289) sur les éléments longitudinaux de châssis (210, 211) desquels deux paires de roues (40, 41, 42, 43) sont disposées avec un espacement entre elles dans le sens longitudinal et un dispositif de chariot élévateur (3) installé à l'intérieur de la remorque (1), lequel dispositif de chariot élévateur (3) peut être transféré à l'intérieur de la remorque (1) entre une position de transport dans laquelle du produit chargé peut être transporté et une position de chargement dans laquelle le produit chargé peut être levé et abaissé à l'aide du dispositif de chariot élévateur (3), étant prévu au moins un élément de liaison transversale (200, 201) qui relie les éléments longitudinaux de châssis (210, 211) entre eux au niveau des roues (40, 41, 42, 43) et que la position de chargement du dispositif de chariot élévateur (3) -vu dans le sens de circulation- se trouve juste derrière l'au moins un élément de liaison transversale (200, 201), de sorte que le dispositif de chariot élévateur (3) peut être abaissé jusqu'au niveau du fond (35) sur lequel la remorque (1) se trouve, **caractérisée en ce que** le dispositif de chariot élévateur comporte des bras de fourche (20, 21) orientés à l'opposé du sens de circulation de la remorque (1) et pouvant être amenés dans des fentes de fourches correspondantes d'une charge, que sont prévus deux éléments de liaison transversale (200, 201) reliés fixement aux éléments longitudinaux de châssis (210, 211) et réalisés sous forme de profilés creux dans les extrémités desquels des branches d'appui (240, 241) servant à l'appui des roues (40, 41, 42, 43) sont guidées élastiquement de manière à pouvoir tourner, le dispositif de chariot élévateur (3) pouvant, en position de chargement, être abaissé derrière l'élément de liaison transversal arrière (200) des deux éléments de liaison transversale (200, 201).

2. Remorque selon la revendication 1, **caractérisée en ce qu'**une charge déposée par le dispositif de chariot élévateur (3) sur la remorque (1) se trouve au dessus des deux éléments de liaison transversale (200, 201).

3. Remorque selon la revendication 1 ou 2, **caractérisée en ce que** le dispositif de chariot élévateur (3) se trouve, en position de transport, -vu dans le sens de circulation- sensiblement dans la zone avant de la remorque (1).

4. Remorque selon la revendication 1, 2 ou 3, **caractérisée en ce qu'**il est prévu une cloison de fond (72, 73) qui peut être enlevée au moins partiellement.
